(19) Europäisches Patentamt

European Patent Office

Office européen des brevets

(11) Veröffentlichungsnummer: **0 286 023 B1**

(12) **EUROPÄISCHE PATENTSCHRIFT**

(45) Veröffentlichungstag der Patentschrift: **20.05.92**

(21) Anmeldenummer: **88105256.7**

(22) Anmeldetag: **31.03.88**

(51) Int. Cl.⁵: **F16K 17/36**, F16L 55/10

(54) **Vorrichtung zur Sicherung von Gasleitungen.**

(30) Priorität: **06.04.87 DE 3711547**
**06.04.87 DE 3711548**
**02.06.87 DE 3718497**

(43) Veröffentlichungstag der Anmeldung:
**12.10.88 Patentblatt 88/41**

(45) Bekanntmachung des Hinweises auf die
Patenterteilung:
**20.05.92 Patentblatt 92/21**

(84) Benannte Vertragsstaaten:
**AT BE CH DE ES FR GB GR IT LI LU NL SE**

(56) Entgegenhaltungen:
**US-A- 4 449 545**
**US-A- 4 513 763**

(73) Patentinhaber: **Jeschke, Immanuel**
**St. Nicolai-Strasse 4 + 5**
**W-3203 Sarstedt OT Heisede(DE)**

(72) Erfinder: **Jeschke, Immanuel**
**St. Nicolai-Strasse 4 + 5**
**W-3203 Sarstedt OT Heisede(DE)**

(74) Vertreter: **Junius, Walther, Dr.**
**Wolfstrasse 24**
**W-3000 Hannover 81(DE)**

# Beschreibung

Die Erfindung betrifft eine Vorrichtung zur Sicherung von mit einem Medium durchströmten Leitungen entsprechend den im Oberbegriff von Anspruch 1 bzw. 2 aufgeführten Merkmalen. Die US-A-44 49 545 enthält die im Oberbegriff von Anspruch 1 genannten Merkmale und die US-A-45 13 763 die von Anspruch 2.

Immer wieder kommt es vor, daß bei Erdarbeiten mit Hilfe von maschinellem Gerät, z.B. bei Arbeiten mit Baggern, Gasleitungen ergriffen werden und dabei beschädigt werden. Gasleitungen aus Kunststoff werden dabei in manchen Fällen zerrissen, in anderen Fällen jedoch nur stark gedehnt, wobei Risse entstehen können, durch die das Gas ausströmt. Gasleitungen aus Stahl werden im allgemeinen nicht zerrissen und auch nicht in ihrer Länge gedehnt, vielmehr werden die starken Zugkräfte auf die Gasleitung aus Stahl bis in die an die Gasleitung angeschlossenen Häuser übertragen, wo im Inneren der Häuser ein Reißen an geschwächten Stellen erfolgt. Da ein Reißen von Gasleitungen innerhalb von Häusern bereits zu schweren Explosionsunglücken geführt hat, werden in die Gasleitung vor dem Haus ein sogenannter Zugkraftbegrenzer eingebaut. Das ist eine Vorrichtung, die eine Trennstelle darstellt, die bei Überschreiten bestimmter vorgegebener Zugkräfte die Gasleitung trennt, damit nicht innerhalb eines Gebäudes Verformungen oder gar ein Bruch der Gasleitung auftritt.

Ist eine solche Trennung der Gasleitung im Zugkraftbegrenzer aufgetreten, strömt das Gas an dieser Trennstelle vor dem Haus aus.

Auch das braucht nicht ungefährlich zu sein, insbesondere dann nicht, wenn der Baggerführer das Ergreifen der Leitung nicht dem Gasversorgungsunternehmen gemeldet hat. Denn die hier austretenden Gase strömen durch Erdspalten, wie sie in Leitungsgräben immer vorhanden sind, bis an die Hauswand, wo manchmal durch schlechte Abdichtung ein Eintritt des Gases in das Haus möglich ist.

Es ist die Aufgabe der Erfindung, eine Möglichkeit zur Sicherung von Gasleitungen zu schaffen, die bei jedem Auftreten von Zugkräften, die durch äußere Einflüsse ausgelöst sind, die Gasleitung sicher verschließt.

Die erfindungsgemäße Vorrichtung zur Sicherung von Gasleitungen ist durch die im Anspruch 1 bzw. 2 angegebenen Merkmale definiert.

Insbesondere bei Gasleitungen aus Kunststoff, die relativ stark gedehnt werden können, ohne daß sie durchreißen, ist es zweckmäßig, wenn der Auslöser ein in der Gasleitung verlegtes Zugelement, z.B. ein Seil, ein Faden, ein Band, eine Stange oder ein Draht ist, welches einen Ventilkörper in seine Verschlußstellung zieht oder welches ein Auflager für die Verschlußfeder eines Ventiles bewegt. Wird z.B. eine Gasleitung aus Kunststoff von einem Bagger bei Erdarbeiten ergriffen und ein Stück aus der Erde gezogen, so dehnt sich die aus Kunststoff hergestellte Leitung, das in der Leitung befindliche Zugelement, z.B. ein Seil, dehnt sich jedoch nicht oder nur sehr viel geringfügiger. Bei diesem Vorgang wird das in der Gasleitung verlegte Zugelement somit gespannt. Es kann dabei einen Ventilkörper in seine Verschlußstellung ziehen oder es kann ein Auflager für die Verschlußfeder eines Ventiles wegreißen, zerbrechen oder einfach fortziehen, so daß die Verschlußfeder des Ventiles den Ventilkörper in seinen Sitz hineinzieht.

Bei dieser Ausführungsform der Erfindung ist es zweckmäßig, wenn das Ventil am Anfang des zu sichernden Gasleitungsstranges angeordnet ist und das Zugelement mit seinem einen Ende am Ende des zu sichernden Gasleitungsstranges, mit seinem anderen Ende am Ventilkörper oder an einem die Bewegung des Ventilkörpers auslösenden Bauteil angebracht ist. Hierdurch wird erreicht, daß der Gasleitungsstrang, an dem der unerwünschte äußere Eingriff, der zu Zugkräften in der Gasleitung geführt hat, ausgeübt wurde, sicher verschlossen wird. In diesem beschädigten Gasleitungsstrang kann dann Gas nicht mehr eintreten.

Ist in der Gasleitung ein Zugkraftbegrenzer eingebaut, wie das bei Gasleitungen aus Stahl immer der Fall sein sollte, so ist es zweckmäßig, wenn der Auslöser Teil des Zugkraftbegrenzers ist oder mit einem solchen Teil verbunden ist und eine Stütze oder ein Auflager für die Verschlußfeder des Absperrventiles bildet und wenn das Ventil am Ende des zu sichernden Gasleitungsstranges angeordnet ist. Wird durch hohe Zugkräfte, wie sie immer dann auftreten, wenn ein Bagger eine Gasleitung ergreift, das Ende des Gasleitungsstranges aus dem Zugkraftbegrenzer herausgerissen, so schließt das Absperrventil unverhindert einen Gasaustritt aus der Gasleitung. Da Gasleitungen aus Stahl bei Einwirkung dieser äußeren Kräfte im allgemeinen nicht reißen, ist somit gesichert, daß ein Gasaustritt nicht erfolgt.

Baulich ist es zweckmäßig, wenn das Ventil in einem Gehäuse mit zwei Absätzen und/oder Gewinden eingebaut ist, von denen der eine den Ventilsitz und der andere das Auflager für die gespannte Ventilverschlußfeder haltert.

Zweckmäßig ist es weiter, wenn das Ventilgehäuse die Bauteile des Zugkraftbegrenzers aufnimmt und umschließt, nämlich das im Gehäuse verschiebbar und durch Dichtringe abgedichtete Ende des zu sichernden Gasleitungsstranges mit einer in dieses Ende eingebauten Halterung für mindestens ein Zugelement, z.B. in Form einer Schraube, eines Bolzens oder dergleichen, das am Auflager für die Verschlußfeder des Ventiles befestigt ist und vorzugsweise in der Halterung und/oder im Auflager verschiebbar ist.

Dieses Auflager wird zweckmäßigerweise durch eine Feder, ein Federpaket, eine Stange, ein Haltekreuz oder dergleichen gebildet.

In anderen Fällen kann es zweckmäßig sein, wenn das Ventilgehäuse die Bauteile des Zugkraftbegrenzers aufnimmt und umschließt, nämlich das im Gehäuse verschiebbar und durch Dichtringe abgedichtete Ende des zu sichernden Gasleitungsstranges mit einer in dieses Ende eingebauten Halterung für mindestens ein Zugelement, z.B. in Form einer Schraube, eines Bolzens oder dergleichen, das mit einer Sollbruchstelle versehen ist, mit seinem einen Ende in einer den Ventilsitz bildenden Scheibe und mit seinem anderen Ende in der in das Ende des zu sichernden Gasleitungsstranges eingebauten Halterung (vorzugsweise verschiebbar) befestigt ist und zwischen diesem Ende und der Sollbruchstelle ein Widerlager für die Verschlußfeder des Ventiles trägt.

Die Verschiebbarkeit der Halterung dient dazu, thermische Ausdehnungen nicht auf das Auflager der Ventilverschlußfeder wirken zu lassen. Diese Kombinationsaggregate aus Zugkraftbegrenzer und Absperrventil können aus Kunststoff ebenso wie aus Metall gebaut sein.

Zweckmäßig ist es in vielen Fällen, insbesondere dort, wo die Vorrichtung aus Metall gebaut ist, an dem Ventilgehäuse eine Schutz- und Dichtmuffe befestigt ist, welche mit ihrem Ende den zu sichernden Gasleitungsstrang überfaßt.

Das Wesen der Erfindung ist nachstehend anhand von in der Zeichnung schematisch dargestellten Ausführungsbeispielen näher erläutert. Es zeigen:

Fig. 1 eine von einer Straße in ein Gebäude verlegte Gasversorgungsleitung,

Fig. 2 die Verankerung für das in dieser Leitung verlegte Seil,

Fig. 3 einen Schnitt durch das Ventil in Bereitschaftstellung,

Fig. 4 einen Schnitt durch das Ventil in geschlossener Stellung,

Fig. 5 eine andere Verankerungsmöglichkeit für das Seil,

Fig. 6 einen Querschnitt durch die Gasversorgungsleitung mit dem Abzweigstutzen für die Hausleitung, an deren Anfang das Absperrventil angeordnet ist, das sich hier in geöffneter Stellung befindet,

Fig. 7 das Absperrventil der Fig. 6 in geschlossener Stellung,

Fig. 8 einen Schnitt durch ein anderes Absperrventil in geöffneter Stellung, dessen Verschlußfeder sich auf eine verbiegbare Stütze abstützt,

Fig. 9 das verschlossene Ventil der Fig. 8 nach Herausziehen der verbiegbaren Stütze,

Fig. 10 einen Schnitt durch das Ventilgehäuse,

Fig. 11 eine Seitenansicht der herausziehbaren Stütze mit Ankoppelvorrichtung,

Fig. 12 eine Stirnseitenansicht der Ankoppelvorrichtung,

Fig. 13 eine Seitenansicht des Ventiles,

Fig. 14 eine Ansicht des Ventilsitzes,

Fig. 15 einen Schnitt durch ein anderes Ventil, dessen Auflager für die Verschlußfeder ein Federpaket ist im geöffneten Zustand,

Fig. 16 im geschlossenen Zustand,

Fig. 17 eine Ansicht der Stütze mit Ankoppelvorrichtung,

Fig. 18 eine Stirnseitenansicht des Federpaketes mit Ankoppelvorrichtung,

Fig. 19 eine von der Straße in ein Gebäude verlegte Gasversorgungsleitung mit einem Zugkraftbegrenzer,

Fig. 20 einen Schnitt durch einen Zugkraftbegrenzer, bei dem das Koppelelement ein Seil ist,

Fig. 21 einen Schnitt durch einen anderen Zugkraftbegrenzer, bei dem das Koppelelement zum Ventil ein verschiebbarer Bolzen ist,

Fig. 22 eine Seitenansicht des Ventiles,

Fig. 23 eine Seitenansicht des Koppelelementes mit der Stütze für die Verschlußfeder,

Fig. 24 eine Seitenansicht des Stützringes für die Stütze,

Fig. 25 eine Stirnseitenansicht des Ventilsitzes,

Fig. 26 eine Stirnseitenansicht der Stütze,

Fig. 27 eine Stirnseitenansicht einer anderen Stütze,

Fig. 28 einen Schnitt durch ein ähnliches Aggregat Absperrventil - Zugkraftbegrenzer, dessen Gehäuseteile aus Kunststoff hergestellt sind,

Fig. 29 einen Schnitt durch einen weiteren Zugkraftbegrenzer, dessen Abstützelement ein Federpaket ist,

Fig. 30 einen Schnitt durch ein weiteres Aggregat Zugkraftbegrenzer - Absperrventil mit einer Sollbruchstelle in dem die Teile zusammenhaltenden Schraubbolzen, - in geöffneter Ventilstellung,

Fig. 31 den Gegenstand der Fig. 30 in geschlossener Ventilstellung.

Die Gasversorgungsleitung 1 für die Versorgung des Gebäudes 2 ist durch einen Vorgarten 3 geführt und an die unter der Straße 4 verlegte Gasversorgungsleitung 5 über einen T-Abzweig 6 angeschlossen. Im Gebäude 2 ist das andere Ende der Gasversorgungsleitung 1 ebenfalls über einen T-Abzweig 7 an das im Hause verlegte Rohrsystem mit dem Absperrventil 9 angeschlossen.

In das tote Ende dieses T-Abzweiges 7 im Gebäude ist eine Verankerungsstelle in Form eines Hakens 9 für ein in der Gasversorgungsleitung 1 verlegtes Seil 10 angeordnet.

Unmittelbar neben dem straßenseitigen T-Abzweig 6 ist in die Gasversorgungsleitung 1 ein Ventil 11 eingebaut. Dieses Ventil weist ein Gehäuse 12 auf, in dem sich ein Ventilsitz 13 und eine Schutzhülse 14 und in dieser ein Ventilkegel 15 befinden. Die Schutzhülse kann zentral im Ventilgehäuse angeordnet und durch eine Halterung gehaltert sein, so daß sie allseitig vom durchströmenden Gas umflossen wird. Sie kann aber auch, wie im gezeichneten Ausführungsbeispiel dargestellt, sich am Boden des Ventilgehäuses 12 befinden.

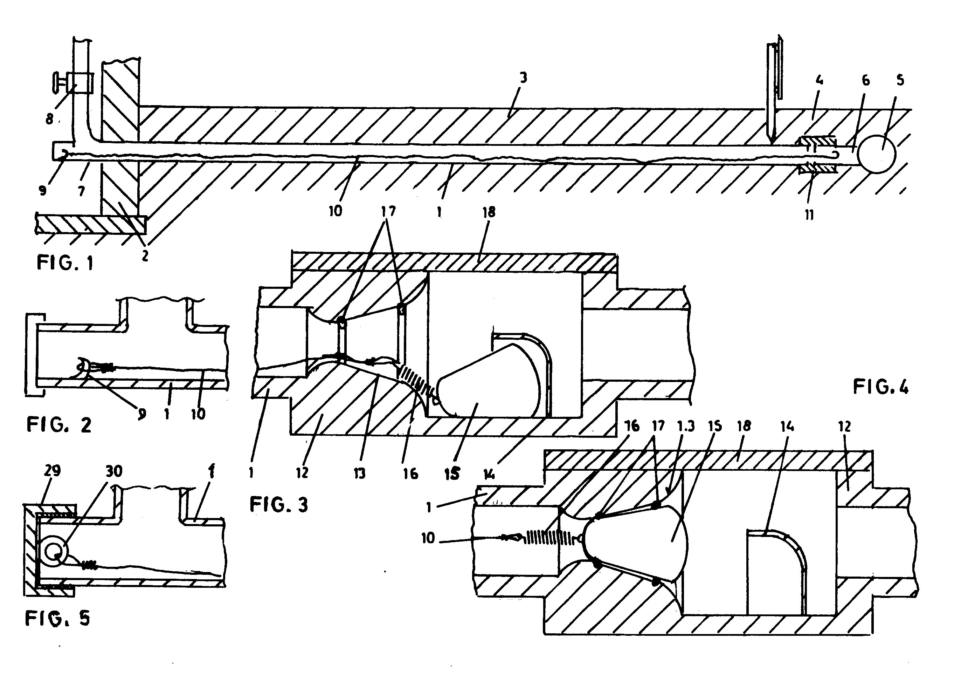

Der Ventilkegel 15 ist über die Schraubenfeder 16 mit dem Seil 10 verbunden. An der Innenwandung des Ventilsitzes 13 sind zwei Dichtringe 17 in hierfür vorgesehene Rillen eingelegt. Ist der Ventilkegel 15 aus seiner in Fig. 3 dargestellten Ruhestellung durch starke, auf die Gasversorgungsleitung wirkende axiale Kräfte in die in Fig. 4 dargestellte Verschlußstellung gezogen, so reißt die Schraubenfeder 16 bei stärker werdenden Kräften ab. Der Ventilkegel 15 steht unter dem Druck des in der Straße verlegten Gasversorgungsleitung befindlichen Gases und wird durch dieses zusätzlich zu der Klemmwirkung im Ventilsitz gehalten.

Damit der Ventilkegel 15 in dem Ventilgehäuse 12 von außen zugänglich ist, ist es zweckmäßig, wenn das Ventilgehäuse 12 nach oben hin durch einen Deckel 18 abgeschlossen ist.

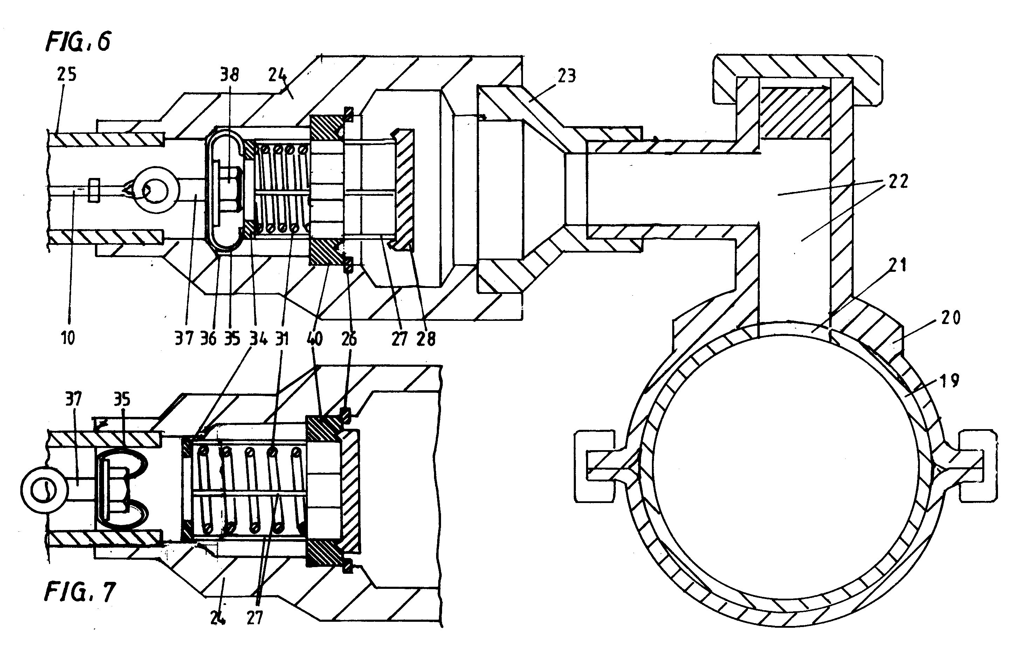

In Fig. 5 ist eine andere Verankerungsmöglichkeit für das Seil gezeigt. Hier ist an der Schraubkappe innen ein Haken oder eine Öse 30 angebracht, an die das Ende des Seiles 10 angehängt ist.

Anstelle dieser sehr einfachen in den Fig. 3 und 4 gezeigten Konstruktion ist es zweckmäßig, ein Ventil zu verwenden, dessen Ventilkörper durch die Kraft einer gespannten Feder in den Sitz gedrückt wird, wenn der Weg für diese Feder frei gegeben wird. Ein Ausführungsbeispiel ist in den Fig. 6 und 7 gezeigt:
Um die in der Straße verlegte Gasversorgungsleitung 19 ist eine Anbohrmanschette 20 angebracht, mit der ein Loch 21 in die Gasversorgungsleitung 19 gebohrt ist. Durch dieses Loch 21 strömt das Gas in die zu einem Gebäude führende Abzweigleitung 22, das Paßstück 23 und das Ventilgehäuse 24 in die aus Kunststoff bestehende Haus-Gasanschlußleitung 25. Diese einzelnen Teile sind sämtlich aus Kunststoff hergestellt und durch Schweißen oder Kleben miteinander verbunden. Die Haus-Gasanschlußleitung 25 ist die eigentliche zu sichernde Leitung. Vor ihrem Anfang befindet sich das Absperrventil und in ihr verläuft das Seil 10, welches am anderen Ende der Leitung 25 befestigt ist. Im Inneren des Ventilgehäuses 24 ist das eigentliche Ventil eingebaut. Es besteht aus einem den Ventilsitz bildenden Ring 25, welcher mittels eines Federringes 26 im Gehäuse 24 festgelegt ist, einem von Stangen 27 getragenen, verschiebbaren Ventilkörper 28 und einer Verschlußfeder 31. Die Stangen 27 sind in Bohrungen 32 geführt, die in Vorsprüngen 33 befindlich sind, die fest am Ring 25 angebracht sind. An ihrem einen Ende sind die Stangen 27 am Ventilkörper 28, der im gezeichneten Ausführungsbeispiel die Form eines Ventiltellers hat, befestigt, am anderen Ende der Stangen 27 ist ein Abstützring 34 befestigt. Die Verschlußfeder 31 ist eine Druckfeder, als Schraubenfeder ausgebildet, die zwischen dem Abstützring 34 und dem Ventilsitzring 25 angeordnet ist und von den Stangen 27 wie in einem Käfig gehalten wird. Um das Ventil in der in Fig. 7 gezeigten Offenstellung zu halten, ist es erforderlich, die Verschlußfeder 31 zusammenzupressen. Dieses Zusammenpressen erfolgt durch eine C-förmig gebogene Feder 35, auf deren Enden sich der Abstützring 34 stützt. Diese Feder 35 liegt an einem Absatz 36 im Gehäuse 24 an. In der Mitte der an beiden abgebogenen Enden der Feder 35 befindet sich ein Loch, in welches der Ringbolzen 37 eingesetzt ist, der mittels der Mutter 38 an der Abstützfeder 35 angebracht ist. Im Ring des Ringbolzens 37 ist das Seil 10 befestigt.

Diese Sicherheitsvorrichtung funktioniert folgendermaßen:

Wird die Haus-Gasanschlußleitung 25 von einem Bagger ergriffen, so lenkt sie sich durch den Einfluß der auf sie wirkenden Zugkräfte, denn sie ist aus Kunststoff hergestellt. Überschreiten diese Zugkräfte gewisse Grenzen, reißt auch die Leitung 25. Das Seil 10 ist jedoch aus einem nicht dehnbaren Werkstoff hergestellt. Es vergrößert seine Länge nicht. Da es an seinem einen Ende im Hause befestigt ist, übt das Seil Zugkräfte auf den Ringbolzen 37 aus, wenn die zu sichernde Haus-Gasanschlußleitung länger wird. Diese auf den Ringbolzen 37 ausgeübten Zugkräfte werden so groß, daß sie die Feder 35 verformen und in die Gas-Hausanschlußleitung 25 hineinziehen, wie es in Fig. 7 gezeigt ist. Dadurch verliert der Abstützring 34 seine Stütze, die Verschlußfeder 31 kann jetzt frei den Abstützring 34 so verschieben, daß der Ventilkörper 28 in seinen Ventilsitz 39 hineinfällt. Damit ist die Gas-Hausanschlußleitung fest verschlossen.

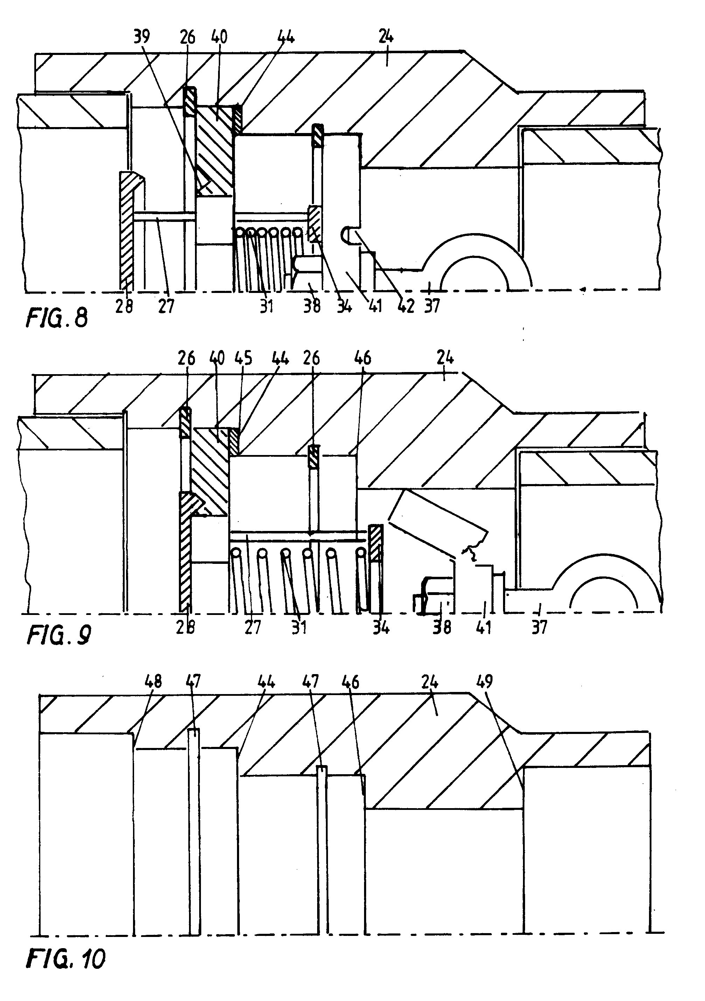

Im Ausführungsbeispiel der Figuren 8 bis 10 sind Schnitte der oberen Hälfte einer erfindungsgemäßen Vorrichtung gezeigt, bei der das gleiche Ventil mit den Bauteilen 27, 28, 31, 34, 40 eingebaut ist, die Abstützung hier jedoch über eine verbiegbare Stütze 41 erfolgt, in deren Armen Ausnehmungen 42 vorhanden sind, um an deren Ort die Verbiegung vorzunehmen, und bei der ein zentrales Loch 43 vorgesehen ist, in welches der Ringbolzen 37 eingesetzt ist, an dem das Seil befestigt wird. Auch hier ist das Ventilgehäuse 24 aus Kunststoff hergestellt, es weist einen Absatz 44 für die Anlage eines Dichtringes 45 und des Ventilsitzringes 40 auf, sowie einen zweiten Absatz 46 als Anlagefläche für die verbiegbare Stütze 41. Sowohl die verbiegbare Stütze 41 als auch der Ventilsitzring 40 sind mittels Federringen 26 gehalten, für die Ausnehmungen 47 im Gehäuse 24 vorgesehen sind. Diese Ausnehmungen 47 brauchen nicht vorgesehen zu werden, wenn als Befestigungsmittel Blechringe mit nach außen gerichteten federden Vorspüngen als Befestigungsmittel verwendet werden. Diese mit federnden Vorsprüngen versehenen Blechringe werden nach dem Einlegen der verbiegbaren Stütze 41 und dann nach dem Einlegen des Ventilsitzringes 40 in das Gehäuse eingeschoben und angepreßt. Hierdurch erhalten sie und die von ihnen festgelegten Teile einen festen Sitz. Im Gehäuse 24 der Fig. 10 sind noch zwei weitere Absätze 48, 49 vorgesehen, die als Begrenzung beim Einschieben des Rohres 25 der Gas-Hausanschlußleitung und des Paßstückes 23 beim Vorgang des Einklebens oder Einschweißens dienen.

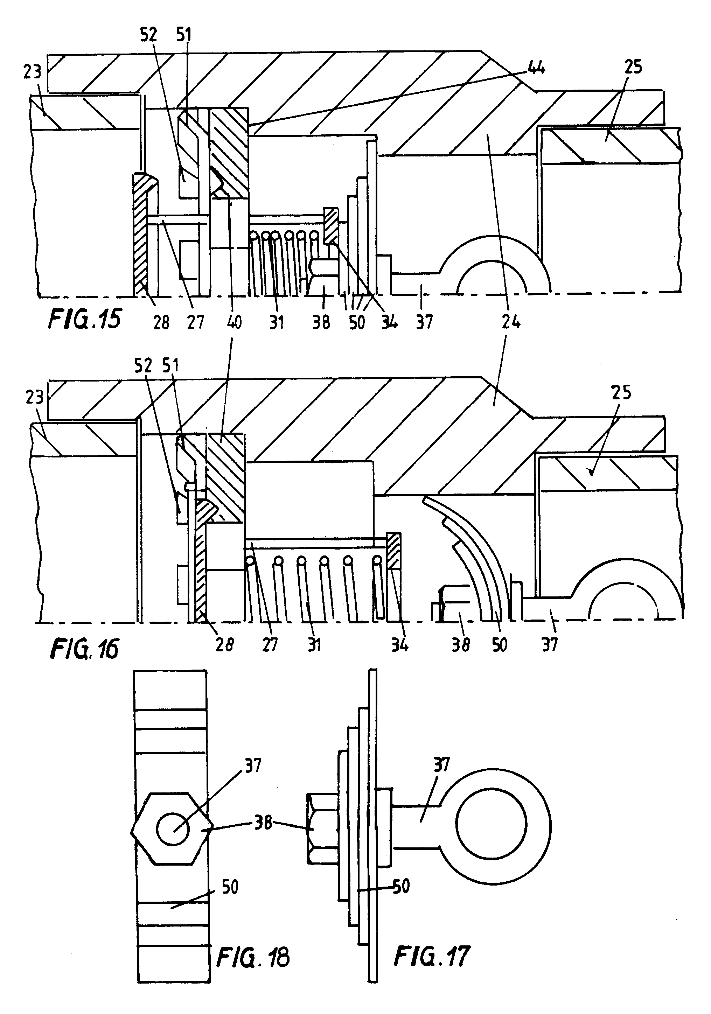

Im Ausführungsbeispiel der Fig. 15 bis 18 ist das gleiche Ventil mit den Teilen 27, 28, 31, 34, 40 verwendet, welches auch in den beiden vorhergehenden Ausführungsbeispielen verwendet worden ist. Als Abstützung für den Abstützring 34 dient hier ein Blattfederpaket 50, welches eine zentrale Bohrung aufweist, durch die der Ringbolzen 37 gesteckt ist. Hier ist der Ventilsitzring 40 mittels eines Federblechringes 51 befestigt, der nach außen gerichtete, federnde Vorsprünge 52 aufweist. Diese federnden Vorsprünge sind vom Ventilsitzring 40 weggebogen. Dadurch kann man den Federblechring 51 leicht in das Gehäuse 24 einschieben, ein Zurückschieben ist jedoch nicht möglich, da die federnd an der Innenwandung des Gehäuses 24 anliegenden Vorsprünge beim Zurückschieben sich in die Wandung hineinbeißen.

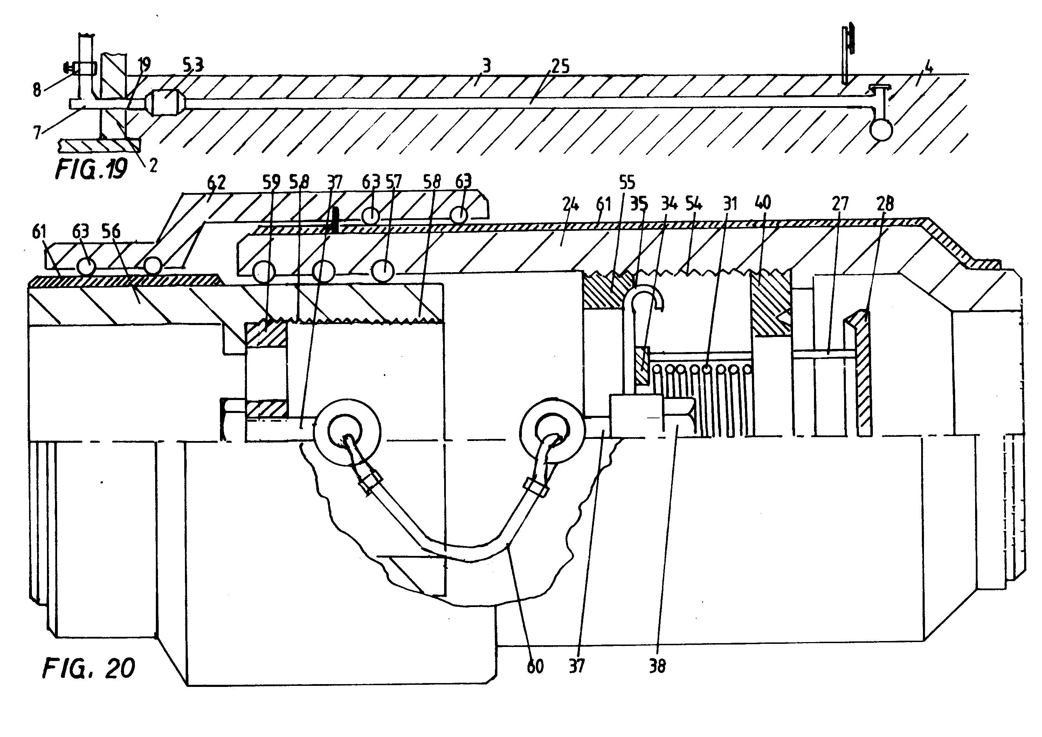

Wird die Gas-Hausanschlußleitung 25, wie es Fig. 19 zeigt, aus Stahl hergestellt, so wird in dieser unmittelbar vor der Hauswand 2 ein Zugkraftbegrenzer 53 angeordnet. Aufgabe dieses Zugkraftbegrenzers ist es, bei Überschreiten eines bestimmten Wertes der Zugkraft in der Gasleitung diese zu unterbrechen. Erfindungsgemäß wird dieser Zugkraftbegrenzer mit einem Absperrventil kombiniert, welches bei einem Trennen der Gasleitung im Zugkraftbegrenzer 53 die Gasleitung 25 absperrt. Bei aus Stahl gefertigten Gasleitungen 25 erfolgt dieses an dem dem Zugkraftbegrenzer zugewandten Ende der Gasleitung 25, bei Kunststoffleitungen an dem dem Zugkraftbegrenzer 53 abgewandten Ende der Gasleitung 25. In Fig. 19 ist diese Gasleitung 25, ihr Abzweig von der Hauptleitung 19 und ihre Einführung in das Gebäude 2 dargestellt.

Eine einfache Ausführungsform dieser Zugkraftbegrenzer - Absperrventil - Kombination ist in Fig. 20 dargestellt. Hier ist am Ende der Gasleitung 25 das Gehäuse 24 des Ventiles 27, 28, 31, 34, 40 untergebracht, indem der Ventilsitzring 40 in das Innengewinde 54 eingeschraubt ist. Gleichzeitig ist in dieses Gewinde 54 auch ein Abstützring 55 eingeschraubt, auf den sich die Feder 35 abstützt, welche den Abstützring 34 haltert und in ihrer Zentralbohrung den Ringbolzen 37 trägt.

In dieses Ventilgehäuse 24 ragt das freie Ende des Stahlrohres 56 des Hausanschlusses hinein. Dichtringe 57 dichten den Übergang zwischen dem Gehäuse 24 und dem Stahlrohr 56 ab. In das Innengewinde 58 des Stahlrohres 56 ist eine Lochscheibe 59 eingeschraubt, in deren Zentralloch ein weiterer Ringbolzen 37 eingeschraubt ist. Die beiden Ringbolzen 37 sind durch ein Seil 60 miteinander verbunden. Sowohl das Gehäuse 24 als auch das Stahlrohr 56 tragen eine Isolierung 61. Eine Schutzmuffe 62 mit Dichtringen 63 verhindert ein Eindringen von Feuchtigkeit an den unisoierten Teil des Stahlrohres 56, an dem die Dichtringe 57 dichtend anliegen.

Diese Vorrichtung funktioniert folgendermaßen:

Beim Auftreten von thermischen Dehnungen kann sich das an die Gasleitung 25 angebrachte Gehäuse 24 frei auf dem Ende des Stahlrohres 56 verschieben. Das Seil 60 weist einen solchen Durchhang auf, daß diese Verschiebung möglich ist. Greifen jedoch sehr starke Zugkräfte am Gasrohr 25 an, wie sie auftreten,wenn die Schaufel eines Baggers die Gasleitung 25 hochreißt, dann spannt sich das Seil 60 und reißt bei einer weiteren Bewegung der Leitung 25 und des daran angebrachten Gehäuses 24 die Feder 35 aus ihrem Sitz. Dadurch verliert der Abstützring 34 seine Stütze an der Feder 35,und der Ventilteller 28 fällt in seinen Sitz am Ring 40.

Bei dieser mit einem Seil ausgestatteten Ausführungsform braucht das Ventil nicht am Ende der Gasleitung 25 angeordnet zu sein, es kann auch am Anfang der Gasleitung, wie in Fig. 1 dargestellt, angeordnet sein. Das Seil 60 verläuft dann durch die gesamte Gasleitung 25 hindurch. - Im Stahlrohr 56 braucht das Seil 60 nicht unbedingt mittels der Lochscheibe 59 angebracht zu sein, es kann auch an einer anderen Stelle, wie in Fig. 1, 2 und 5 angedeutet, an Haken oder dort angebrachten Ringbolzen angebracht sein.

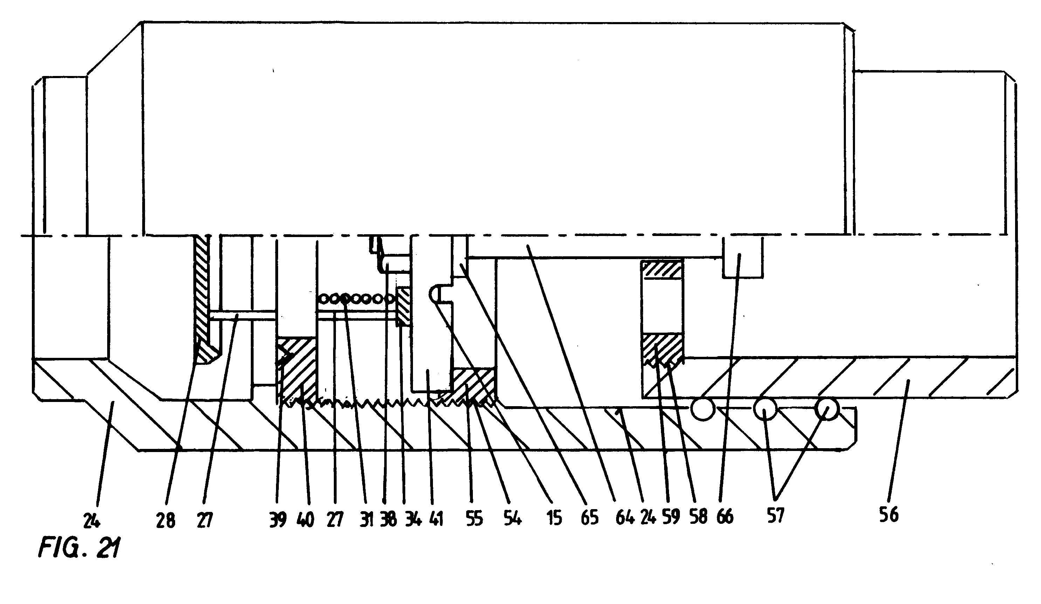

Eine weitere Ausführungsform der Zugkraftbegrenzer-Absperrventil-Kombination ist in Fig. 21 dargestellt. Im Stahlrohr 56 ist hier wieder ein Innengewinde 58 angeordnet, in das eine Lochscheibe 59 eingeschraubt ist. In das Gehäuse 24 ist ein Ventil 27, 28, 31, 34, 40 eingebaut, indem der Ventilsitzring 40 in das Innengewinde 54 eingeschraubt ist. Ein Abstützring 34 ist ebenfalls in dies Gewinde 54 eingeschraubt. Auf diesen Abstützring stützt sich die verbiegbare Stütze 41 ab, auf die sich hinwiederum der Abstützring 34 abstützt. Im Zentralloch 43 der verbiegbaren Stütze 41 ist ein Schraubbolzen 64 eingesetzt und mittels der Mutter 38 und des Ringes 65 gesichert, welcher an einem Absatz des Schraubbolzens 64 anliegt. Zwischen diesem Absatz und dem Kopf 66 des Schraubbolzens 64 befindet sich eine glatte Oberfläche des Schraubbolzens 64, so daß sich der Schraubbolzen 64 bei terhmischen Dehnungen frei in der Lochscheibe 59 bewegen kann, jedoch nur über eine Länge, die durch den Abstand des Ringes 65 vom Kopf 66 gegeben ist. Dadurch kann sich das Rohr 56 im Gehäuse 24 bei thermischen Ausdehnungen frei bewegen, ohne daß es zu einem Verschließen des Ventiles 27, 28, 31, 34, 40 kommt. Treten jedoch so hohe Zugkräfte an der Leitung 25 auf, wie sie beim Angriff eines Baggers beispielsweise auftreten, dann schiebt sich der Bolzenkopf 66 an die Ringscheibe 59, dann verbiegt sich anschließend das Biegeelement 41, dann wird es auch soweit bewegt, bis das Biegeelement 41 dem Abstützring 34 den Weg völlig frei gibt, so daß die Druckfeder 31 den Ventilteller 28 in seinen Sitz 39 hineindrücken kann.

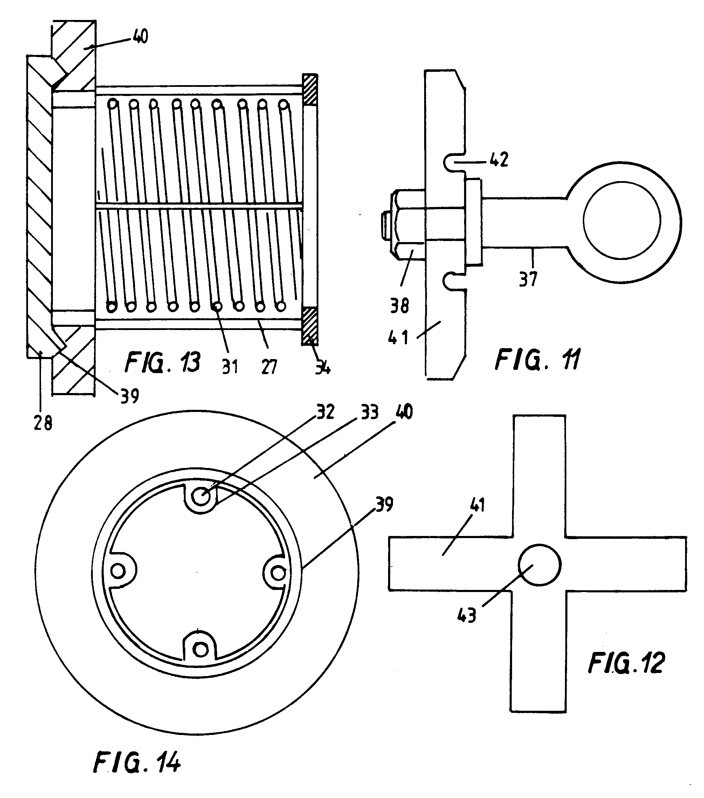

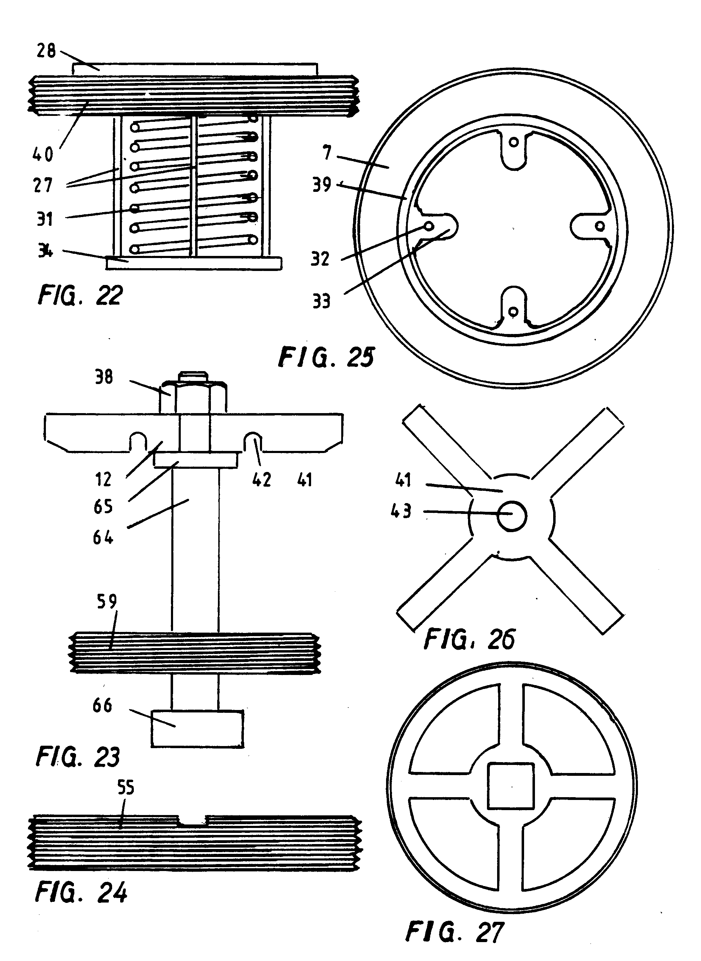

Die Teile dieser Kombination, wie sie in den Fig. 22 - 26 dargestellt sind, sind den Teilen der Fig. 11 bis 14 sehr ähnlich, unterscheiden sich jedoch dadurch, daß die Ringe an ihrer Außenseite Gewinde tragen.

Die in Fig. 27 dargestellte verbiegbare Stütze 41 besteht aus einem Ring mit vier Armen und einem rechteckigen Zentralloch. Zum Herausreißen dieser Stütze ist es erforderlich, daß nicht nur die Arme, sondern auch der Außenring verbogen werden.

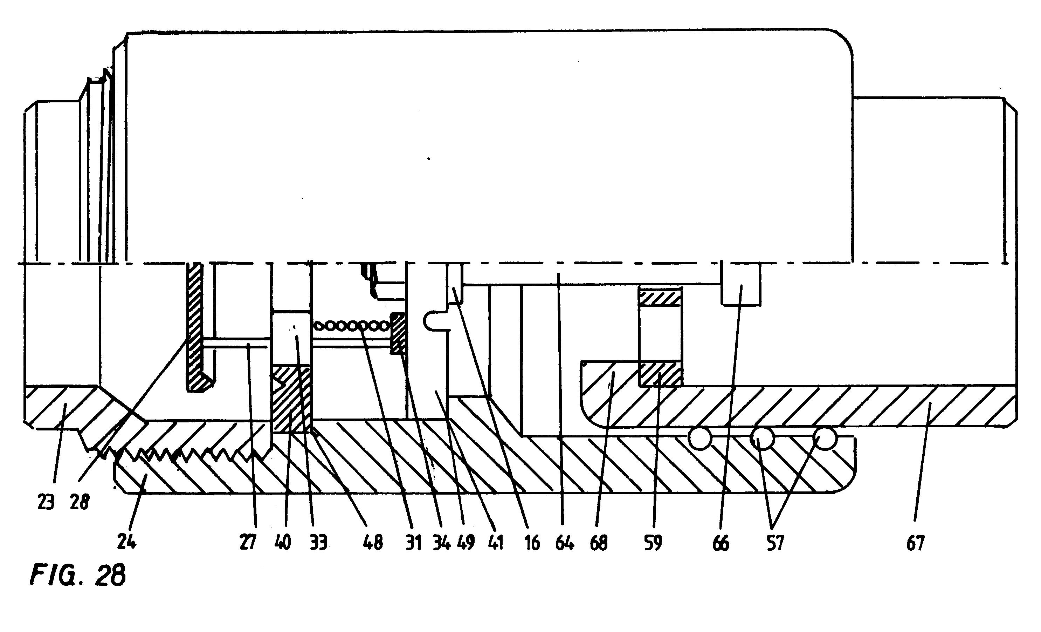

Die Zugkraftbegrenzer-Absperrventil-Kombination des Ausführungsbeispieles der Fig. 28 ist in ihren Gehäuse-und Rohrteilen aus Kunststoff hergestellt. In das Kunststoffrohr 67 ist die Lochscheibe 59 eingelegt, sie stützt sich gegen den Innenflansch 68 ab. Sie kann durch eine Federscheibe mit nach außen gerichteten Vorsprüngen festgesetzt sein, dieses ist aber nicht unbedingt erforderlich. Auch das Ventilgehäuse 24 ist aus Kunststoff hergestellt. Es weist zwei Absätze 48, 49 auf, gegen den Absatz 48 ist der Ventilstützring 40 durch das eingeschraubte Paßteil 23 gedrückt, gegen den Absatz 49 ist die verbiegbare Stütze 41 durch die Kraft der Druckfeder 31 gedrückt. Die Funktion entspricht der Funktion der vorhergehend beschriebenen Kombination: Bei sehr starken Zugkräften wird die verbiegbare Stütze 41 mittels des Bolzens 64 herausgerissen und dadurch der Weg für den Abstützring 34 freigemacht, so daß die Feder 31 den Ventilteller 28 in seinen Ventilsitz 39 hineindrücken kann.

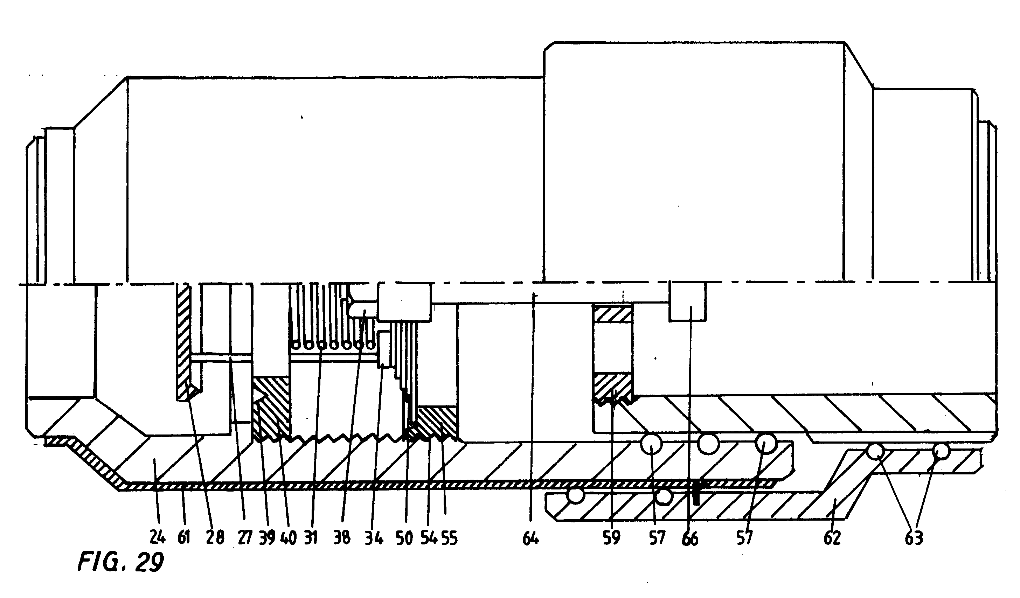

Im Ausführungsbeispiel der Fig. 29 ist das gleiche Ventil verwendet, es ist in das Innengewinde 54 eingeschraubt. Ein Federpaket 50, welches sich auf einen Abstützring 34 abstützt, trägt in seinem Zentralloch den Schraubbolzen 64, dessen Bolzenkopf 66 bei starken Zugkräften an der Lochscheibe 59 zur Anlage kommt. Bei sehr starken Zugkräften reißt der Schraubbolzen 64 das Federpaket 50 vom Tragring 34 weg und gibt somit dem Abstützring 34 den Weg frei, damit die Druckfeder 31 den Ventilteller 28 in seinen Sitz 39 ziehen kann.

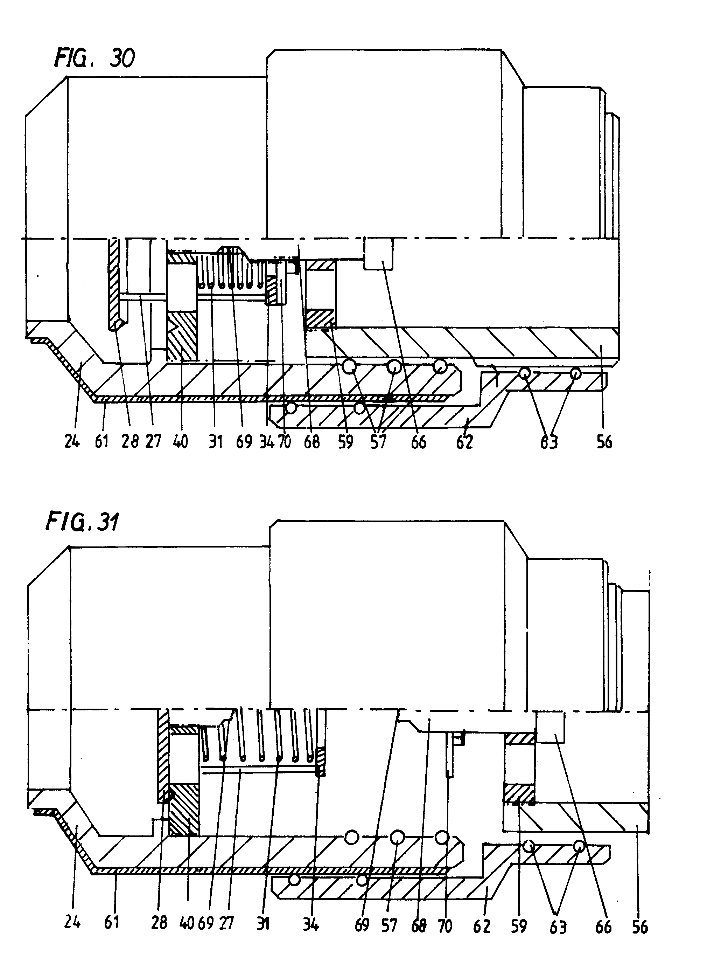

Wiederum eine andere Ausführungsform der Zugkraftbegrenzer-Absperrventil-Kombination ist in den Fig. 30 und 31 dargestellt. Hier ist in das Gehäuse 24 das gleiche Ventil 27, 28, 31, 34, 40 eingebaut. Der Ventilsitzring 40 ist hier jedoch als Lochscheibe ausgebildet. In einem Zentralloch mit Gewinde ist der Schraubbolzen 68 eingeschraubt, welcher sich durch das Zentralloch der Lochscheibe 59 erstreckt und an seinem Ende einen Bolzenkopf 66 aufweist. Dieser Schraubbolzen 68 weist in seiner dem Bolzenkopf 66 abgewandten Hälfte eine als Sollbruchstelle vorgesehene Ausnehmung 69 auf und trägt als Abstützung für den Abstützring 34 des Ventiles eine Abstützscheibe 70. Vor dem Bolzenkopf 66 weist der Schraubbolzen 68 einen glatten Abschnitt auf, welcher sich im Zentralloch der Lochscheibe 59 befindet. Bei thermischen Dehnungen verschiebt sich der Schraubbolzen 68 im Zentralloch, bei sehr starken Zugkräften legt sich der Bolzenkopf 66 an die Lochscheibe 59 an, bis der Schraubbolzen 64 an der Sollbruchstelle 69 auseinanderbricht, wie es in Fig. 31 dargestellt ist. Jetzt wird das Rohr 56 aus dem Gehäuse 24 herausgezogen, dem Abstützring 34 wird der Weg freigegeben und die Feder 31 drückt den Ventilteller 28 in seinen Ventilsitz 39.

## Patentansprüche

1. Vorrichtung zur Sicherung von mit einem Medium durchströmten Rohrleitungen beim Auftreten von Zugkräften bestehend aus einem in eine Rohrleitung eingebauten Auslöser (10, 60, 64, 68) und einem in die Rohrleitung eingebauten Absperrventil (27,28,31,34,40) mit einem Ventilkörper, die miteinander derart gekoppelt sind,
daß bei Überschreiten einer bestimmten Zugkraft das geöffnete Absperrventil (27,28,31,34,40) durch den Auslöser (10,60,64,68) in seine Verschlußstellung überführt wird, wobei
das Absperrventil (27,28,31,34,40) zwischen der Lieferquelle des Mediums und dem Auslöser angeordnet ist,
dadurch gekennzeichnet, daß die Rohrleitung eine erdverlegte Gasleitung ist,
daß der Auslöser (10,60,64,68) ein in der Gasleitung verlegtes Zugelement, z.B. ein Seil (10), ein Faden, ein Band, eine Stange oder ein Draht ist,
und daß das Ventil (27,28,31,34,40) am Anfang der zu sichernden Gasleitung angeordnet und das Zugelement (10) mit seinem einen Ende an der zu sichernden Gasleitung und mit seinem anderen Ende an einem die Bewegung des Ventilkörpers (28) auslösenden Bauteil (35,41,50) angebracht ist.

2.  Vorrichtung zur Sicherung von erdverlegten Gasleitungen, bestehend aus einem in eine Gasleitung eingebauten Auslöser und einem in die Gasleitung eingebauten Absperrventil mit einem Ventilkörper, die miteinander gekoppelt sind,
dadurch gekennzeichnet,
daß der Auslöser ein in der Gasleitung verlegtes Zugelement, z.B. ein Seil (10), ein Faden, ein Band, eine Stange oder ein Draht ist, welches den Ventilkörper (5) in seine Verschlußstellung zieht,
und daß das Ventil (27,28,31,34,40) am Anfang der zu sichernden Gasleitung angeordnet und das Zugelement (10) mit seinem einen Ende am Ende der zu sichernden Gasleitung und mit seinem anderen Ende am Ventilkörper (15) angebracht ist.

3.  Vorrichtung nach Anspruch 1,
dadurch gekennzeichnet,
daß der Auslöser Teil eines Zugkraftbegrenzers ist oder mit einem solchen Teil verbunden ist und eine Stütze oder ein Auflager für eine Verschlußfeder (31) des Ventiles ist.

4.  Vorrichtung nach Anspruch 1,
dadurch gekennzeichnet,
daß das Ventil in einem Gehäuse (24) mit zwei Absätzen (48,49) und/oder Gewinden eingebaut ist, von denen der eine einen Ventilsitz (40) und der andere das Auflager für die gespannte Verschlußfeder (31) haltert.

5.  Vorrichtung nach Anspruch 4,
dadurch gekennzeichnet,
daß das Ventilgehäuse (24) die Bauteile des Zugkraftbegrenzers aufnimmt und umschließt, nämlich das im Gehäuse (24) verschiebbar und durch Dichtringe abgedichtete Ende der Rohrleitung mit einer in dieses Ende eingebauten Halterung (59) für mindestens ein Zugelement, z.B. in Form des Seiles, einer Schraube, eines Bolzens (64) oder dergleichen, welches am Auflager für die Verschlußfeder (31) des Ventiles befestigt ist und vorzugsweise in der Halterung (59) und/oder im Auflager verschiebbar ist.

6.  Vorrichtung nach Anspruch 5,
dadurch gekennzeichnet
daß das Auflager durch eine Feder (35), ein Federpaket (50), eine Stange, ein Haltekreuz (41) oder dergleichen gebildet ist.

7.  Vorrichtung nach Anspruch 1, 3 und 4,
dadurch gekennzeichnet,
daß das Ventilgehäuse (24) die Bauteile des Zugkraftbegrenzers aufnimmt und umschließt, nämlich das im Gehäuse (24) und durch Dichtringe abgedichtete Ende der Rohrleitung mit einer in dieses Ende eingebauten Halterung für mindestens ein Zugelement, z.B. in Form des Seiles (10) einer Schraube, eines Bolzens (68) oder dergleichen, wobei das Zugelement mit einer Sollbruchstelle (69) versehen ist und mit seinem einen Ende in einer den Ventilsitz bildenden Scheibe und mit seinem anderen Ende in einer in das Ende der Rohrleitung eingebauten Halterung (vorzugsweise verschiebbar) befestigt ist, wobei das Zugelement zwischen diesem einen Ende und der Sollbruchstelle (69) ein Widerlager für die Verschlußfeder des Ventiles trägt.

8.  Vorrichtung nach Anspruch 1 und 3,
dadurch gekennzeichnet,
daß an dem Ventilgehäuse eine Schutz- und Dichtmuffe (62) befestigt ist, welche mit ihrem einen Ende das Ende der zu sichernden Gasleitung überfaßt.

**Claims**

1.  A device for securing pipelines traversed by a medium on the occurrence of tensile forces comprising a release mechanism (10, 60, 64, 68) installed in a pipeline and a shut-off valve (27, 28, 31, 34, 40) installed in the pipeline and comprising a valve body, which are coupled to one another in such manner that when a specified tensile force is exceeded, the release mechanism (10, 60, 64, 68) brings the open shut-off valve (27, 28, 31, 34, 40) into its closed position, wherein the shut-off valve (27, 28, 31, 34, 40) is arranged between the supply source of the medium and the release mechanism, characterised in that the pipeline is an underground gas pipeline, that the release mechanism (10, 60, 64, 68) is a tension element installed in the gas pipeline, e.g. a cable (10), filament, band, rod or wire.

2. A device for securing underground gas pipelines, comprising a release mechanism installed in a gas pipeline and a shut-off valve, installed in the gas pipeline, with a valve body, which are coupled to one another, characterised in that the release mechanism consists of a tension element installed in the gas pipeline, e.g. a cable (10), filament, band, rod or wire, which pulls the valve body (15) into its closed position, and that the valve (27, 28, 31, 34, 40) is arranged at the beginning of the gas pipeline which is to be secured and the tension element (10) is attached at one of its ends to the end of the gas pipeline which is to be secured and is attached at its other end to the valve body (15).

3. A device as claimed in Claim 1, characterised in that the release mechanism is part of a tensile force limiting device or is connected to such a device and consists of a support or a bearing for a closing spring (31) of the valve.

4. A device as claimed in Claim 1, characterised in that the valve is installed in a housing (24) comprising two shoulders (48, 49) and/or threads, of which one supports a valve seat (40) and the other supports the bearing for the tensioned closing spring (31).

5. A device as claimed in Claim 4, characterised in that the valve housing (24) accommodates and encloses the components of the tensile force limiting device, namely that end of the pipeline which is displaceable in the housing (24) and is sealed by sealing rings, with a mounting (59), which is installed in this end, for at least one tension element, e.g. in the form of the cable, a screw, a pin (64) or the like, which is attached to the bearing for the closing spring (31) of the valve and preferably is displaceable in the mounting (59) and/or in the bearing.

6. A device as claimed in Claim 5, characterised in that the bearing is formed by a spring (35), a set of springs (50), a rod, a cruciform beam (41) or the like.

7. A device as claimed in Claim 1, 3 and 4, characterised in that the valve housing (24) accommodates and encloses the components of the tensile force limiting device, namely that end of the pipeline, in the housing and is sealed by sealing rings with a mounting, installed in this end, for at least one tension element, e.g. in the form of the cable (10), a screw, a pin (68) or the like, where the tension element is provided with a theoretical breakage point (69) and is attached at one of its ends in a plate forming the valve seat and at its other end is attached (preferably displaceably) in a mounting installed in the end of the pipeline, where the tension element bears an abutment for the closing spring between this first end and the theoretical breakage point (69).

8. A device as claimed in Claim 1 and 3, characterised in that a protective and sealing bushing (62) is attached to the valve housing, where one end of said bushing engages over the end of the gas pipeline which is to be secured.

**Revendications**

1. Dispositif pour protéger des conduites transportant un fluide lors de l'apparition de forces de traction, constitué d'un élément de déclenchement (10,60,64,68) monté dans une conduite et d'une soupape d'isolement (27,28,31,34,40) montée dans la conduite et comportant un obturateur, l'élément de déclenchement et la soupape d'isolement étant couplés de telle sorte que, lors du dépassement d'une force de traction donnée, la soupape d'isolement ouverte (27,28,31,34,40) est transférée par l'élément de déclenchement (10,60,64,68) dans sa position de fermeture, la soupape d'isolement (27,28,31,34,40) étant disposée entre la source d'alimentation en fluide et l'élément de déclenchement, caractérisé en ce que la conduite est une canalisation de gaz enterrée, et en ce que l'élément de déclenchement (10,60,64,68) est un élément de traction posé dans la canalisation de gaz, par exemple un câble (10), un fil, une bande, une tige ou un fil métallique, et en ce que la soupape (27,28,31,34,40) est disposée au début de la canalisation de gaz à protéger, et l'élément de traction (10) est fixé par sa première extrémité à la canalisation de gaz à protéger, et par son autre extrémité à un élément constructif (35,41,50) déclenchant le mouvement de l'obturateur (28).

2. Dispositif pour protéger des canalisations de gaz enterrées, constitué d'un élément de déclenchement monté dans une canalisation de gaz et d'une soupape d'isolement montée dans la canalisation de gaz et comportant un obturateur, l'élément de déclenchement et la soupape d'isolement étant couplés l'un à l'autre,
caractérisé en ce que l'élément de déclenchement est un élément de traction posé dans la canalisation de gaz, par exemple un câble (10), un fil, une bande, une tige ou un fil métallique, qui tire l'obturateur (15) dans sa position d'obturation,
et en ce que la soupape (27,28,31,34,40) est disposée au début de la canalisation de gaz à protéger, et l'élément de traction (10) est fixé par sa première extrémité à l'extrémité de la canalisation de gaz à protéger, et par son autre extrémité à l'obturateur (15),

3. Dispositif selon la revendication 1, caractérisé en ce que l'élément de déclenchement est une pièce d'un limiteur de force de traction ou est assemblé à une telle pièce, et est un support ou un appui pour un ressort d'obturation (31) de la soupape.

4. Dispositif selon la revendication 1, caractérisé en ce que la soupape est montée dans un boîtier (24) présentant deux gradins (48,49) et/ou filetages, dont l'un maintient un siège de soupape (40) et l'autre l'appui pour le ressort d'obturation tendu (31).

5. Dispositif selon la revendication 4, caractérisé en ce que le boîtier de soupape (24) reçoit et entoure les pièces du limiteur de force de traction, à savoir l'extrémité, pouvant coulisser dans le boîtier (24) et étanchéifiée par des bagues d'étanchéité, de la conduite, avec un élément de fixation (59) monté dans cette extrémité et destiné à au moins un élément de traction, par exemple sous la forme du câble, d'une vis, d'un boulon (64) ou similaire, qui est fixé sur l'appui pour le ressort d'obturation (31) de la soupape et qui est de préférence coulissant dans l'élément de fixation (59) et/ou dans l'appui.

6. Dispositif selon la revendication 5, caractérisé en ce que l'appui est constitué par un ressort (35), un ensemble de ressorts (50), une tige, un croisillon de retenue (41) ou similaire.

7. Dispositif selon les revendications 1, 3 et 4, caractérisé en ce que le boîtier de soupape (24) reçoit et entoure les pièces du limiteur de force de traction, à savoir l'extrémité, pouvant coulisser dans le boîtier (24) et étanchéifiée par des bagues d'étanchéité, de la conduite, avec un élément de fixation monté dans cette extrémité et destiné à au moins un élément de traction, par exemple sous la forme du câble (10), d'une vis, d'un boulon (68) ou similaire, l'élément de traction étant muni d'un point destiné à la rupture (69) et étant fixé (de préférence avec possibilité de coulissement, par sa première extrémité dans un disque constituant le siège de soupape, et par son autre extrémité dans un élément de fixation monté dans l'extrémité de la conduite, l'élément de traction portant, entre cette première extrémité et le point destiné à la rupture (69), un contre-appui pour le ressort d'obturation de la soupape.

8. Dispositif selon les revendications 1 et 3, caractérisé en ce qu'un manchon de protection et d'étanchéité (62) est fixé sur le boîtier de soupape et entoure par une de ses extrémités l'extrémité de la canalisation de gaz à protéger.

FIG. 1

FIG. 2

FIG. 3

FIG. 4

FIG. 5

FIG.6

FIG.7

FIG. 8

FIG. 9

FIG. 10

FIG. 13

FIG. 11

FIG. 14

FIG.12

FIG.15

52 51

23

44

25

28 27 40 31 38 50 34 37 24

FIG.16

52 51

23

25

24

28 27 31 34 38 50 37

FIG.18

37

38

50

FIG.17

37

37

50

FIG. 19

FIG. 20

FIG. 21

24  28  27  39  40  27  31  38  34  41  55  54  15  65  64  24  59  58  66  57  56

EP 0 286 023 B1

FIG. 22

FIG. 25

FIG. 23

FIG. 26

FIG. 24

FIG. 27

FIG. 28

FIG. 29

FIG. 30

24  61  28 27  40  31  69 34 70  68  59  57  66  62  63  56

FIG. 31

24  61  28  40 69 27  31  34  69 57 68 70  62  59  63  66  56